# EUROPEAN PATENT APPLICATION

(11) **EP 2 902 988 A1**
(43) Date of publication of application: **05.08.2015**
(21) Application number: 15151673.9
(22) Date of filing: 19.01.2015
(51) Int. Cl.: G08G 5/00, G01C 23/00, G02B 27/01

(54) **Systems and methods for displaying a datalink message log on a forward field-of-view display**

(30) Priority: 30.01.2014 US 201461933472 P; 21.07.2014 US 201414336933
(71) Applicant: Honeywell International Inc., Morristown, NJ 07962-2245 (US)
(72) Inventor: Rodney, Timothy Lee, Morristown, NJ New Jersey 07962-2245 (US); Judy, Victoria, Morristown, NJ New Jersey 07962-2245 (US); Scheu, Steven Scott, Morristown, NJ New Jersey 07962-2245 (US); Mannon, Pamela, Morristown, NJ New Jersey 07962-2245 (US)
(74) Representative: Houghton, Mark Phillip

(57) **Abstract**

Systems and methods for displaying a datalink message log on a Forward Field-of-View display are provided. In one embodiment, an avionics system for displaying a Forward Ficld-of-View log of datalink messages on-board an aircraft comprises: a processor executing a Datalink Message Log Function that manages a datalink message log, the Message Log Function in communication with at least one on-board memory storage device storing Datalink Message Data; and a human machine interface (HMI) device in communication with the Message Log Function, the HMI device comprising a Forward Field-of-View Display presenting a first screen that displays a log of datalink messages from the Message Data; wherein at least one entry of the log of datalink messages is presented in the first screen in a collapsed form and at least one entry for an active datalink message is presented in the first screen in an expanded form.

## Description

### CROSS REFERENCE TO RELATED APPLICATIONS

This application claim the benefit of, and priority to, U.S. Provisional Application No. 61/933,472 entitled "DATALINK CPDLC MESSAGE LOG ON FORWARD FIELD-OF-VIEW" filed on January 30, 2014, attorney docket H0044214-5435, which is incorporated herein by reference.

### BACKGROUND

In the commercial airline industry, communications between air traffic control (ATC) ground stations and aircraft flight crews is evolving away from voice based communications towards electronic messaging. Controller-pilot data link communications (CPDLC) systems are one example of a system providing a data link for ATC communications. One disadvantage of CPDLC communications as compared to voice communications is that a pilot must divert attention away from the forward view of the aircraft in order to read CPDLC messages displayed on a screen. Providing CPDLC messages on Forward Field-of-View (FFOV) displays provides one means to reduce this diversion of the pilot's attention. However, current proposals for CPDLC FFOV displays for conveying CPDLC messages may themselves result in unnecessary diversions of pilot attention in situations when multiple messages are sent in a short time period and the context of the overall communication interchange may not be clear.

For the reasons stated above and for other reasons stated below which will become apparent to those skilled in the art upon reading and understanding the specification, there is a need in the art for systems and methods for displaying a datalink message log on a forward field-of-view display.

### SUMMARY

Embodiments of the present invention provide methods and systems for displaying a datalink message log on a forward field-of-view display and will be understood by reading and studying the following specification.

Systems and methods for displaying a datalink message log on a Forward Field-of-View display are provided. In one embodiment, an avionics system for displaying a Forward Field-of-View log of datalink messages on-board an aircraft comprises: a processor executing a Datalink Message Log Function that manages a datalink message log, the Message Log Function in communication with at least one on-board memory storage device storing Datalink Message Data; and a human machine interface (HMI) device in communication with the Message Log Function, the HMI device comprising a Forward Field-of-View Display presenting a first screen that displays a log of datalink messages from the Message Data; wherein at least one entry of the log of datalink messages is presented in the first screen in a collapsed form and at least one entry for an active datalink message is presented in the first screen in an expanded form.

### DRAWINGS

Embodiments of the present invention can be more easily understood and further advantages and uses thereof more readily apparent, when considered in view of the description of the preferred embodiments and the following figures in which:
Figure 1 is a block diagram illustrating a system of one embodiment of the present disclosure;
Figure 2 illustrates a Forward Field-of-View display screen presenting a view of a datalink message log for one embodiment of the present invention;
Figure 3A illustrates a Forward Field-of-View display screen presenting a datalink message log for one embodiment of the present invention;
Figure 3B illustrates a Forward Field-of-View display screen presenting a datalink message log for one embodiment of the present invention;
Figure 4 illustrates a flow chart for a method of one embodiment of the present invention.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

Embodiments of the present disclosure provide a Forward Field-of-View (FFOV) display for datalink messages that addresses situations when multiple messages are sent in a short time period. More specifically, embodiments of the present disclosure present a pilot with a Forward Field-of-View display that includes an operational datalink message log of datalink messages. In some embodiments, this display comprises a log of datalink message which may be new messages that the flight crew have not yet viewed, or open messages that have been viewed, but that have not been responded to. In other embodiments, the log may also include datalink messages that have been responded to. The datalink message log is displayed in the FFOV of the cockpit without the pilot having to perform some action to bring up the display. Information that may be included on the FFOV display with the datalink message log may include, but is not limited to, the ATC network type (e.g. Future Air Navigation System (FANS) or Aeronautical Telecommunications Network (ATN)), the ID of the current ATC center to which the aircraft in logged in, a display title, and information regarding incoming datalink messages. The datalink message log for an individual datalink message may display one or more of, a message-timestamp, an indication of the message-state (e.g., new or open), a message-title, and for an active selected message, the content of the message. In one embodiment, the datalink message log will automatically display the oldest-NEW message as an active and fully expanded message in the datalink message log. Further, in some embodiments, the FFOV display with the datalink message log provides an area to present the pilot with on-board generated status information relevant to the datalink system. For example, a message block or notification area on the FFOV display may inform the pilot when there are more message in the datalink message log than can be displayed at once on the FFOV display. In this manner, the pilot is not only provided FFOV display from which datalink messages can be read, but the context of the overall communication interchange is made more clear by presenting a log of the messages using descriptive message titles. For some embodiments, messages are presented chronologically. In alternate implementations, the chronological order may be with the newest message entry added on top, or with the oldest on top. In one embodiment, the FFOV display window is formatted so that any unused space will appear either at the top or bottom of the window such that added new messages will minimize movement of messages on the screen.

Although the term "pilot" is used through-out to refer to an example user, the term is not intended to be limiting. That is, any act, task, function, selection, etc., described herein as being associated with a pilot action could in fact be performed by any user regardless of whether the user is a pilot or non-pilot.

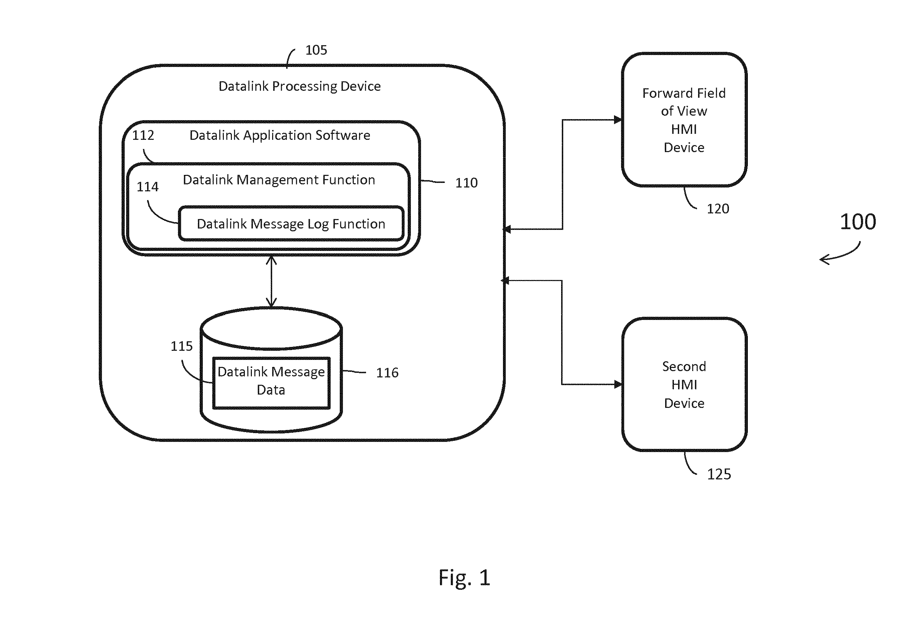

Figure 1 is a block diagram illustrating an on-board avionics system 100 of one embodiment of the present disclosure. System 100 comprises at least one Datalink Processing Device 105, which in alternate embodiments, may be implemented as part of an aircraft's Flight Management System (FMS), Communications Management System (CMS) (which is also commonly referred to as the Communications Management Function (CMF)) or other on-board avionics processor. The types of datalink messages processed by any of the embodiments discussed herein need not be limited to any one standard message type but may include, for example, controller-pilot data link communication (CPDLC) messages, Aeronautical Operational Control (AOC) messages, or Air Traffic Service (ATS)/ARINC 623 messages, or optionally some combination of different datalink message types.

Datalink Processing Device 105 executes one or more instances of Datalink Application Software 110, at least one of which comprises the Datalink Management Function 112. The processing of Datalink uplink and downlink messages is performed by the Datalink Management Function 112. Datalink Processing Device 105 also include at least one memory storage device 116 storing datalink message data 115. In one embodiment, datalink message data 115 includes the message content and meta-data for each datalink message originated by Datalink Processing Device 105 for transmission to an ATC ground station (i.e., downlink messages) and for each datalink message received by Datalink Processing Device 105 from an ATC ground station (i.e., uplink messages). Datalink Processing Device 105 is also coupled to at least one FFOV HMI display 120 and at least one other display such as second HMI display 125. For some embodiments, the second display 125 can also be a FFOV display. For other embodiments, the second display 125 is instead a head-down display. For the purposes of this disclosure, a 'heads-down' display is any display, control or instrument which is not shown on a heads up display (HUD) OR in the pilot's forward field of view. The 'forward field of view' is typically considered the 'Primary Optimum Field of View (FOV)' which is described in AC 25.11-A, Appendix 3 as +/- 15 degrees vertical FOV and +/- 15 degrees right or left of the horizontal FOV. Simply put, if the pilot has to physically move their head down to see something (like a Multifunction Control Display Unit (MCDU) on the cockpit center pedestal) then that would be a 'heads-down' display for the purposes of this disclosure.

With embodiments of the present disclosure, the Datalink Management Function 112 also includes a Datalink Message Log Function 114, which in some embodiments may be implemented as a software module within the Datalink Management Function 112.

In one embodiment, using visual display screens generated by the FFOV HMI display 120, Datalink Massage Log Function 114 displays one or more entries from the Datalink Message Data 115 as described herein. Through a Human Machine Interface Display (HMID) process 122 implemented by FFOV HMI display 120, members of the flight crew are provided controls and input fields on the FFOV HMI display 120 to enter plot selections and input which are communicated back to Datalink Massage Log Function 114 and Datalink Management Function 112.

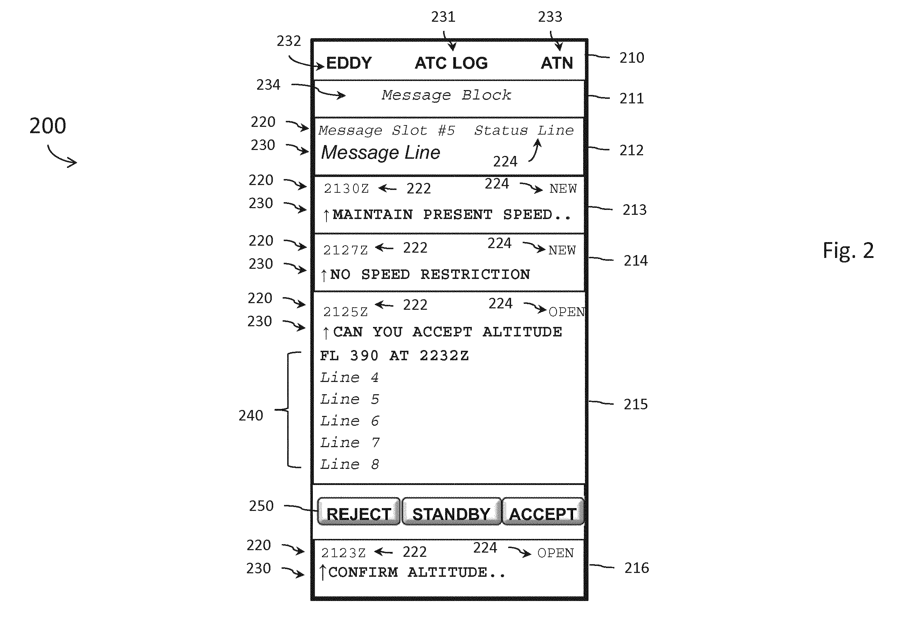

Figure 2 illustrates a Datalink FFOV Screen 200 presented on a FFOV HMI display 120 by Datalink Message Log Function 114 for one embodiment of the present disclosure. In one embodiment, screen 200 may be one of a plurality of screens displayed via FFOV HMI display 120. As shown in Figure 2, Datalink FFOV Screen 200 is organized into a series of blocks 210 to 216.

Block 210 comprises a title block. Title block 210 includes a title displayed at 231 that identifies screen 200 as a log of ATC messages. At 232, title block 210 provides the identification code of the ATC center with which the aircraft is logged into and communicating via the Datalink Management Function 112. At 233 title block 210 indicates the ATC center type to which the Datalink Management Function 112 is currently logged in. For example, if the ATC center operates as a Future Air Navigation System (FANS) center, then that would be indicated in the title block 210 at 233. If the ATC center operates as an Aeronautical Telecommunications Network (ATN) center, then that would be indicated in the title block 210 at 233.

Block 211 comprises a message block with a field 234 to convey on-board generated notification messages to the pilot. For example, if there are more messages in the Datalink Message Log 115 that need to be displayed than can be displayed as a log in Datalink FFOV Screen 200, then the Datalink Message Log Function 114 may generate a notification to be displayed in the message block 211 notifying the pilot of that condition. In other embodiments, other status messages or notifications may be presented in message block 211.

Blocks 212 to 216 comprise message slots, each of which represent one incoming datalink message received by the Datalink Management function 112 from an ATC ground center, and stored into Datalink Message Data 115. In the particular implementation shown in Figure 2, message slots 212 to 216 are used to display uplink messages in the Datalink Message Data 115 having a message status of either NEW (meaning they have not yet been made open by the crew) or OPEN (meaning that they have been open, but not yet responded to). In the implementation shown in Figure 2, the most recently received new message appears towards the top of the log, with older new messages below. For example, the new message logged in message slot 213 was received more recently than the new message logged in message slot 214. In the same way, the most recently received open message appears towards the top of the log, with older open messages below. For example, the open message logged in message slot 215 was received more recently than the open message logged in message slot 216. Also as shown in Figure 2, in some implementations, new messages will appear on top of open messages. It should be noted in some alternate implementations, the Datalink Message Log Function 114 can present and process both uplink messages and downlink messages from Datalink Message data 115 in blocks 212-216. In that case, new uplink messages are presented as the highest priority for display to the pilot, then open uplink messages, and then downlink messages.

In one embodiment, each message presented on FFOV HMI display 120 via Datalink FFOV Screen 200 is displayed in an abbreviated form (for example, with two lines displayed per message), except the active message which is fully expanded to display its full content. Message slots 213, 214 and 215 are examples of a message log entry displayed in an abbreviated, or "collapsed" form. In the collapsed form, a message slot includes a first line 220 that comprises a message time stamp field as shown at 222. For example, the datalink message logged in message slot 214 was received at 2127 Zulu Time, while the datalink message logged in message slot 213 was received at 2130 Zulu Time. The first line 220 also comprises a message status field 224 which indicates, for example, whether the messages is NEW (i.e. received but unopened) or OPEN (i.e., it has been expanded for review but not responded to). If Datalink Message Log Function 114 is configured to also display uplink datalink messages that have been responded to, or downlink datalink messages, message status field 224 would also display a code for those particular message types. In the collapsed form, a message slot also includes a second line 230 that comprises a standardized descriptive title abbreviating the content of the datalink message. In some alternate embodiments, more than one message at a time may be active and displayed in the expanded form.

Message slot 215 illustrates an example of an active message displayed in an expanded form. As with the collapsed form message slots, an expanded form message slot also includes the first line 220 with a time slot field 222 and a message status field, and a second line 230 that comprises a standardized descriptive title abbreviating the content of the datalink message. In addition, one or more additional lines are presented (shown at 240) providing the complete text of the datalink message. Also as illustrated by message slot 215, for some embodiments an active message will include a response field 250 indicating the valid response options that a pilot can choose from to response to the datalink message. Valid response options which can be displayed via field 250 include, for example, "Reject", "Standby", and "Accept". Depending on the type of HMI implemented by FFOV HMI display 120, the "Reject", "Standby", and "Accept" may be activated as touch screen controls, by a cursor controlled selection, or by physical buttons aligned with the "Reject", "Standby", and "Accept" fields on screen 200. In other embodiments, depending on the datalink message content, valid response options may include one or more of "Clear", "Send" and "Arm" selection options. The "Clear" selection option may be provided for messages that do not otherwise require pilot response. The "ARM" selection arms a message that requires an automated report. For some messages, a "Preview" and/or "Load" selection is presented for loadable messages from the screen 200.

Although in Figure 2, the active message displayed at block 215 in the expanded form comprises up to 8 lines of text, in other embodiments an active message may display more or fewer lines. For example, in some embodiments, the active message is expanded to the extent allowed by the available physical display area on FFOV HMI display 120. For a datalink message that contains more lines of text than can be accommodated in the expanded form, a "continued" message is displayed on screen 200 that notifies the crew that additional information is available to be viewed. That message may appear within the expanded block, or in message bock 211. In one embodiment, the "Accept", "Reject", "Standby" response option field 250 on screen 200 is disabled or otherwise only available on screen 200 when the full datalink message can be displayed via the FFOV HMI display 120.

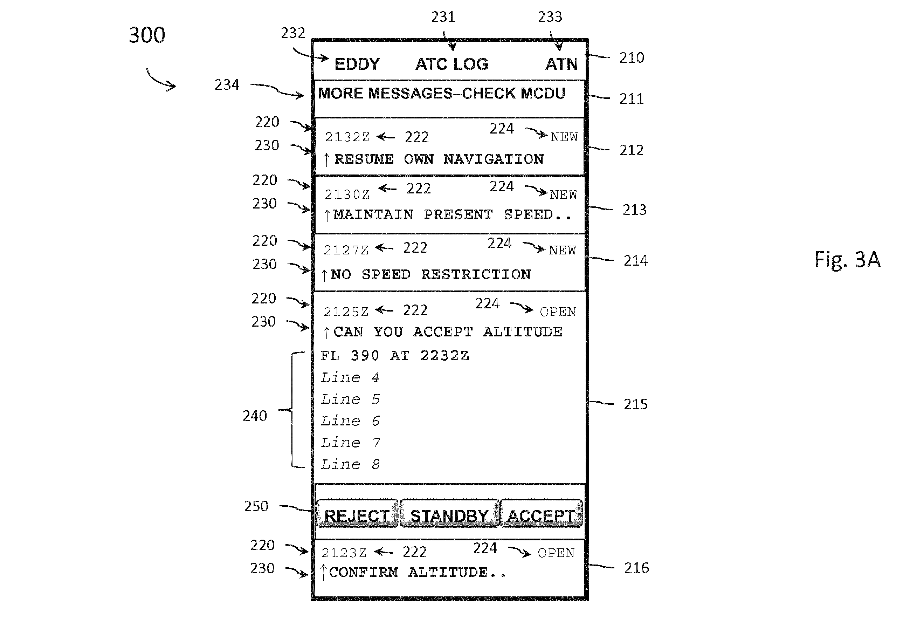

In the case where a new datalink message needs to be displayed but doesn't fit within the area available on the Datalink FFOV Screen 200, a notification may be displayed in field 234 of message block 211 as illustrated in Figure 3A generally at 300. Typically, the log of new and open uplink messages from the Datalink Message Data 115 will fit within the window display area under normal conditions. However, when all messages cannot be displayed, a notification to that affect may be displayed in the message block 211. In other implementation, the window display area may allow scrolling of screen 200 to allow viewing of an entire message. Additionally a message in message block 211 can refer the pilot to another display, such as Heads Down HMI Device 125, or the aircrafts MCDU, to view overflow messages that cannot all be displayed in abbreviated for on FFOV HMI display 120. For example, in Figure 3A, field 234 displays the message "MORE MESSAGES - CHECK MCDU" telling the pilot that additional datalink messages exists in the log, and that they can be found via the cockpit Multifunction Control Display Unit (MCDU). In other implementations, the pilot may instead be referred to the Heads Down HMI Device 125 or other cockpit HMI device. It should be noted that although Figure 2 illustrates a Datalink FFOV Screen 200 comprising 5 available blocks (212-216) of message slots for displaying logged datalink messages, in other embodiments, Datalink FFOV Screen 200 may include more or fewer such message slots.

As should be noted from Figure 2, embodiments of the present disclosure present a pilot with a log of datalink messages that permit the pilot to understand the datalink message in the context of other datalink messages received within a near proximity of time. In the example log display of Figure 2, the pilot is notified by an incoming datalink message at 2127 Zulu Time (i.e., block 214) that the aircraft may proceed with "NO SPEED RESTRICTION." However, that permission was contradicted by a subsequent incoming datalink message at 2130 Zulu Time (i.e., block 213). Thus, even with an open message at block 215 presented in an expanded view, the pilot can still observe other incoming new and open messages and understand each message with a more complete understanding of each message context.

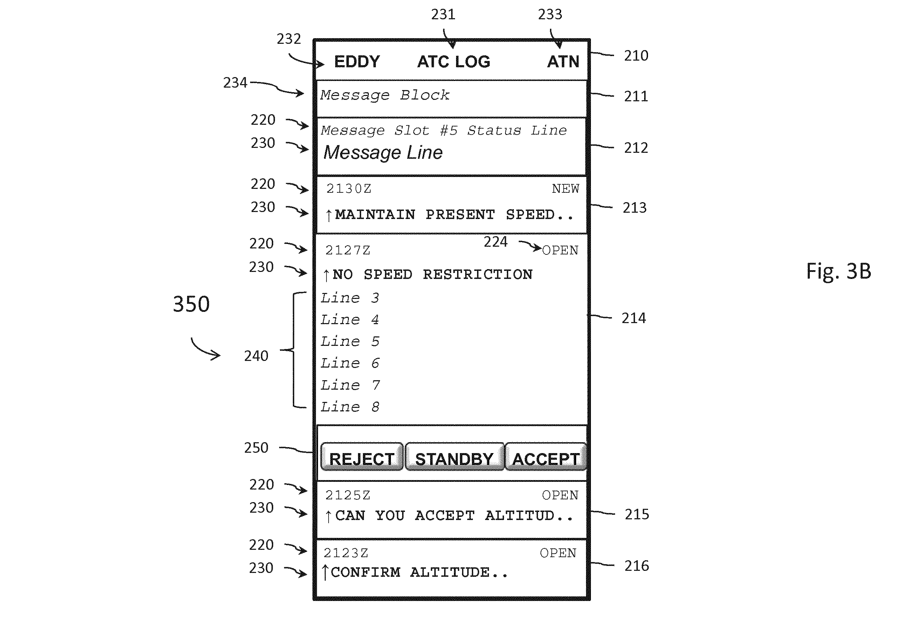

As mentioned above, in one embodiment, the Datalink Message Log Function 114 will automatically display on FFOV HMI display 120 the oldest-NEW message as an active and fully expanded message in Datalink FFOV Screen 200. Further, for some embodiments, only one of the displayed messages from the Datalink log is active and expanded at any one time. As such, the pilot may optionally select another NEW or OPEN message from screen 200 to expand using touch screen controls, a cursor controlled selection, or by physical buttons, depending on the type of HMI device being used to display screen 200. The selected message slot then becomes the active and expanded slot, and the previously active and expanded slot reverts to the "collapsed" form. This is illustrated in Figure 3B where the message slot in block 214, which was collapsed in Figure 2, has now been selected by the pilot and is presented as an active expanded window in Figure 3B as shown generally at 350. As a result of this selection by the pilot, the message slot in block 215, which expanded in Figure 2, in now presented in a collapsed format in Figure 3B. Also note that the message status field 224 for block 224 in Figure 3B has been updated from a message status of NEW (indicating in Figure 2 that the message had never been previously opened and expanded) to OPEN.

Pilot selections, whether opening a new datalink message or entering a selection from response field 250, are processed by the Datalink Management Function 112 and applied as appropriate to the Datalink Message Data 115. Datalink Message Log Function 114 generates screen 200 in the FFOV HMI display 120, without pilot action, presenting a log of datalink message where the detailed output of a single active datalink message is presented in an expanded form with the other datalink messages in the log presented in collapsed form. In some embodiments, the message slots as displayed in screen 200, in addition to activate and expand selected messages, can be manipulated to scroll through message text, filter out unwanted messages, and remove a selected message from the Datalink Message Data 115. For some embodiments, the display of the datalink message log is presented in the FFOV HMI display 120 and in the Heads-down Display 125 in the same or similar formats.

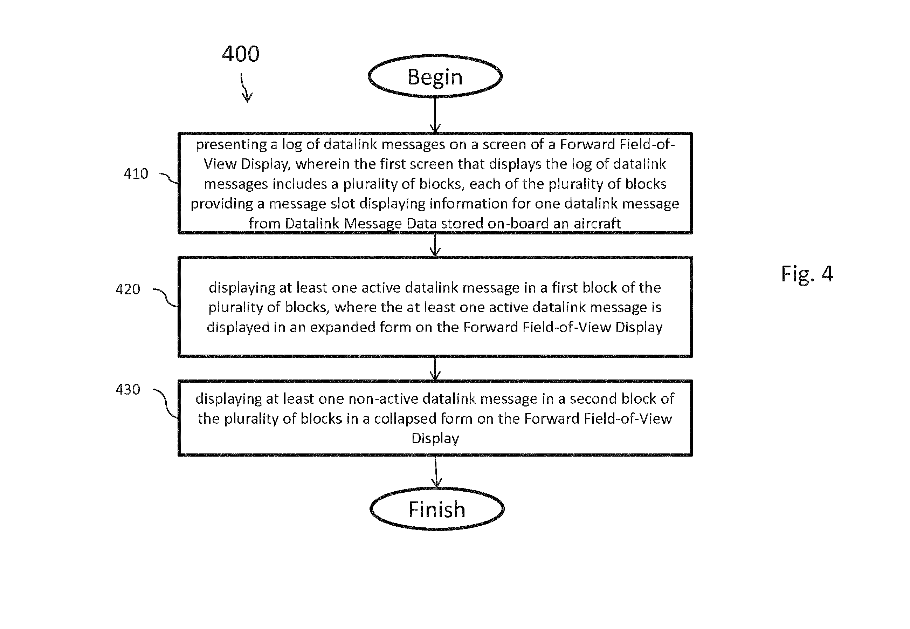

Figure 4 is a flow chart illustrating a method 400 for processing received datalink messages of one embodiment of the present invention. In one embodiment, the method of Figure 4 is implemented at least in part through software being executed by a processor. As such, embodiments include computer executable code that when executed cause the processor and connected peripherals to perform the method illustrated, and further include physical data storage devices that store such executable code. In one embodiment, method 400 may be implemented by an on-board avionics system such as system 100 described above, using Datalink Processing Device 105. As such any options or alternative embodiments described with respect to system 100 may be implemented in combination with method 400 and *vise versa*.

The method begins at 410 with presenting a log of datalink messages on a screen of a Forward Field-of-View Display, wherein the first screen that displays the log of datalink messages includes a plurality of blocks, each of the plurality of blocks providing a message slot displaying information for one datalink message from Datalink Message Data stored on-board an aircraft.

The method proceeds to 420 with displaying at least one active datalink message in a first block of the plurality of blocks, where the at least one active datalink message is displayed in an expanded form on the Forward Field-of-View Display. For some embodiments, only one message at a time is ever active so that only a single datalink message at any one time is displayed on the Forward Field-of-View Display in the expanded form. In some embodiments, an active message displayed in the expanded form may comprise up to 8 lines of text. In other embodiments an active message may display more or fewer lines. For example, in some embodiments, the active message is expanded to the extent allowed by the available physical display area on for the screen of the FFOV display while still permitting one or more non-active datalink messages to be presented in collapsed form. For a datalink message that contains more lines of text than can be accommodated in a message slot in the expanded form, a "continued" message can be displayed on the screen that notifies the pilot that additional information is available to be viewed. In some embodiments, displaying one active datalink message further comprises displaying a response field indicating one or more valid response options for responding to the selected datalink message. In one embodiment, the response field may be disabled or otherwise only available on the screen when the full datalink message can be displayed within the capacity of the message slot.

The method proceeds to 430 with displaying at least one non-active datalink message in a second block of the plurality of blocks in a collapsed form on the Forward Field-of-View Display. With the collapsed form, the screen displays contents of a datalink message in a message slot using an abbreviated form. As described above, in some embodiments, information included in the collapsed form may be limited to a message time stamp field, a message status field, and a standardized descriptive title abbreviating content of a datalink message. In other embodiments, more or less information may be included in the collapsed form. For some embodiments, the collapsed format displays contents of a datalink message using no more than 2 lines of the screen.

For some embodiments, presenting the log of datalink messages on a screen of a Forward Field-of-View Display further comprises filtering the Datalink Message Data such that only datalink messages having a message status of either NEW or OPEN are presented on the screen. That is, only datalink messages having a message status of NEW or OPEN are displayed in the log. However, in other embodiments, datalink messages having different message statuses may be included.

### Example Embodiments

Example 1 includes an avionics system for displaying a Forward Field-of-View log of data link communication messages on-board an aircraft, the system comprising: a processor executing a Datalink Message Log Function that manages a datalink message log, the Datalink Message Log Function in communication with at least one on-board memory storage device storing Datalink Message Data; and a human machine interface device in communication with the Datalink Message Log Function, the human machine interface device comprising a Forward Field-of-View Display presenting a first screen that displays a log of datalink messages from the Datalink Message Data; wherein at least one entry of the log of datalink messages is presented in the first screen in a collapsed form and at least one entry for an active datalink message is presented in the first screen in an expanded form.

Example 2 includes the system of example 1, wherein the Datalink Message Log Function filters the Datalink Message Data such that only datalink messages having a message status of either NEW or OPEN are presented on the first screen.

Example 3 includes the system of any of examples 1-2, wherein the first screen that displays a log of datalink messages is generated by the Datalink Message Log Function.

Example 4 includes the system of any of examples 1-3, further comprising: a second display in communication with the Datalink Message Log Function, wherein the second display present a second log of datalink messages from the Datalink Message Data.

Example 5 includes the system of any of examples 1-4, wherein the first screen that displays a log of datalink messages from Datalink Message Data stored on at least one on-board memory storage device includes a plurality of blocks, each of the plurality of blocks providing a message slot displaying information for one datalink message from the Datalink Message Data.

Example 6 includes the system of any of examples 1-5, wherein, in the collapsed form, the first screen displays contents of a datalink message in a message slot using an abbreviated form.

Example 7 includes the system of example 6, wherein the collapsed form includes: a message time stamp field; a message status field; and a standardized descriptive title abbreviating content of a datalink message.

Example 8 includes the system of any of examples 1-6, wherein the collapsed format displays contents of a datalink message using no more than 2 lines of the first screen.

Example 9 includes the system of any of examples 1-8, wherein, in the expanded form, the first screen displays contents of the at least one active datalink message in a message slot and further displays a response field indicating one or more valid response options.

Example 10 includes the system of any of examples 1-9, wherein when the log of datalink messages includes a greater number of datalink messages than can be displayed by the first screen, a notification is displayed in the first screen.

Example 11 includes the system of example 10, wherein the notification provides instruction referring a user to another display.

Example 12 includes the system of any of examples 1-11, wherein the first screen is formatted so that any unused space will appear either at the top of bottom of the first screen such that added new messages result in minimal movement of messages on the screen.

Example 13 includes the system of any of examples 1-12, wherein entries of the log of datalink messages are presented in the first screen in the collapsed form except for a single active datalink message which is displayed in an expanded form.

Example 14 includes the system of any of examples 1-13, wherein the log of datalink messages comprises controller-pilot data link communications (CPDLC) datalink messages

Example 15 includes a method for displaying a Forward Field-of-View log of datalink communication messages on-board an aircraft, the method comprising: presenting a log of datalink messages on a screen of a Forward Field-of-View Display, wherein the first screen that displays the log of datalink messages includes a plurality of blocks, each of the plurality of blocks providing a message slot displaying information for one datalink message from Datalink Message Data stored on-board an aircraft; displaying at least one active datalink message in a first block of the plurality of blocks, where the at least one active datalink message is displayed in an expanded form on the Forward Field-of-View Display; and displaying at least one non-active datalink message in a second block of the plurality of blocks in a collapsed form on the Forward Field-of-View Display.

Example 16 includes the method of example 15, wherein presenting the log of datalink messages on a screen of a Forward Field-of-View Display further comprises: filtering the Datalink Message Data such that only datalink messages having a message status of either NEW or OPEN are presented on the screen.

Example 17 includes the method of any of examples 15-16, wherein, in the collapsed form, the screen displays contents of a datalink message in a message slot using an abbreviated form.

Example 18 includes the method of example 17, wherein the collapsed form includes: a message time stamp field; a message status field; and a standardized descriptive title abbreviating content of a datalink message.

Example 19 includes the method of any of examples 15-17, wherein the collapsed format displays contents of a datalink message using no more than 2 lines of the screen.

Example 20 includes the method of any of examples 15-19, wherein, in the expanded form, the screen displays contents of the at least one active datalink message in a message slot and further displays a response field indicating one or more valid response options.

Example 21 includes the method of any of examples 15-20, wherein when the log of datalink messages includes a greater number of datalink messages than can be displayed by the first screen, the method further comprises: displaying a notification on the screen.

Example 22 includes the method of any of examples 15-21, wherein entries of the log of datalink messages are presented in the first screen in the collapsed form except for a single active datalink message which is displayed in an expanded form; and wherein the log of datalink messages comprises controller-pilot data link communications (CPDLC) datalink messages.

In various alternative embodiments, any of the system elements or processes described throughout this disclosure (such as CPDLC Message Log Function 114, and processes implementing Human Machine Interface displays 120 and 125, for example) may be implemented on one or more on-board avionics computer systems comprising a processor executing code to realize those elements, said code stored on an on-board non-transient data storage device. Therefore other embodiments of the present disclosure include program instructions resident on computer readable media which when implemented by such on-board avionics computer systems, enable them to implement the embodiments described herein. As used herein, the term "computer readable media" refers to tangible memory storage devices having non-transient physical forms. Such non-transient physical forms may include computer memory devices, such as but not limited to punch cards, magnetic disk or tape, any optical data storage system, flash read only memory (ROM), non-volatile ROM, programmable ROM (PROM), erasable-programmable ROM (E-PROM), random access memory (RAM), or any other form of permanent, semi-permanent, or temporary memory storage system or device having a physical, tangible form. Program instructions include, but are not limited to computer-executable instructions executed by computer system processors and hardware description languages such as Very High Speed Integrated Circuit (VHSIC) Hardware Description Language (VHDL).

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. An avionics system for displaying a Forward Field-of-View log of *data link communication message on-board an aircraft,* the system comprising:
a processor (105) executing a Datalink Message Log Function (114) that manages a datalink message log, the Datalink Message Log Function (114) in communication with at least one on-board memory (116) storage device storing Datalink Message Data (115); and
a human machine interface device in communication with the Datalink Message Log Function (114), the human machine interface device comprising a Forward Field-of-View Display presenting a first screen (200) that displays a log of datalink messages from the Datalink Message Data (115);
wherein at least one entry of the log of datalink messages is presented in the first screen (200) in a collapsed form (213, 214) and at least one entry for an active datalink message is presented in the first screen (200) in an expanded form (215).

2. The system of claim 1, wherein the Datalink Message Log Function (114) filters the Datalink Message Data (115) such that only datalink messages having a message status of either NEW or OPEN are presented on the first screen (200).

3. The system of claim 1, wherein the first screen (200) that displays a log of datalink messages is generated by the Datalink Message Log Function (114).

4. The system of claim 1, further comprising:
a second display (125) in communication with the Datalink Message Log Function (114), wherein the second display (125) presents a second log of datalink messages from the Datalink Message Data (115).

5. The system of claim 1, wherein, in the expanded form, the first screen (200) displays contents of the at least one active datalink message in a message slot and further displays a response field (250) indicating one or more valid response options.

6. A method (400) for displaying a Forward Field-of-View log of *data link communication messages on-board an aircraft, the method comprising:*
*presenting a log of datalink messages on a screen of a* Forward Field-of-View Display (120), wherein the first screen (200) that displays the log of datalink messages includes a plurality of blocks, each of the plurality of blocks providing a message slot displaying information for one datalink message from Datalink Message Data (115) stored on-board an aircraft;
displaying (420) at least one active datalink message in a first block of the plurality of blocks, where the at least one active datalink message is displayed in an expanded form on the Forward Field-of-View Display (120); and
displaying (420) at least one non-active datalink message in a second block of the plurality of blocks in a collapsed form on the Forward Field-of-View Display (120).

7. The method of claim 6, wherein *presenting the log of datalink messages on a screen of a* Forward Field-of-View Display (120) further comprises:
filtering the Datalink Message Data (115) such that only datalink messages having a message status of either NEW or OPEN are presented on the screen (200); and
displaying an identification code (232) of a logged-in Air Traffic Control (ATC) center.

8. The system of claim 1 or the method of claim 6, wherein the collapsed form includes:
a message time stamp field (222);
a message status field (224); and
a standardized descriptive title abbreviating content of a datalink message (230).

9. The system or method of claim 8, wherein the collapsed format displays contents of a datalink message using no more than 2 lines of the screen (200).

10. The method of claim 6, wherein, in the expanded form (215), the screen (200) displays contents of the at least one active datalink message in a message slot and further displays a response field (250) indicating one or more valid response options.
